# EUROPEAN PATENT SPECIFICATION

(11) **EP 3 232 179 B1**
(45) Date of publication and mention of the grant of the patent: **06.11.2019**
(21) Application number: 17166233.1
(22) Date of filing: 12.04.2017
(51) Int. Cl.: G01N 1/08, B65B 1/12, G01N 1/14

(54) **SAMPLING DEVICE AND SAMPLING METHOD**
PROBENAHMEVORRICHTUNG UND PROBENAHMEVERFAHREN
DISPOSITIF D'ÉCHANTILLONNAGE ET PROCÉDÉ D'ÉCHANTILLONNAGE

(30) Priority: 13.04.2016 FI 20165315
(43) Date of publication of application: 18.10.2017
(73) Proprietor: Prometec Tools Oy, 87100 Kajaani (FI)
(72) Inventor: Karlsson, Henna, 87100 Kajaani (FI); Karlsson, Sami, 87100 Kajaani (FI)
(74) Representative: Kolster Oy Ab

(56) References cited:
- EP-A1- 0 330 829
- EP-A1- 2 765 099
- EP-A2- 0 327 667
- AU-A- 8 859 082
- CN-Y- 2 531 379
- FR-A1- 2 996 305
- JP-A- H06 346 430
- US-A- 4 763 702

## Description

### Field

The invention relates to sampling.

### Background

Granular material, such as wood chips or corn, may be used as a power plant fuel. For this reason, for example, it may prove useful to take samples from the material so that a more precise view may be obtained of its characteristics. Samples may be taken, for example, with equipment that allows boring into granular material in a tank, and collect partial samples from them. A problem that boring of samples may present concerns impurities in the material being sampled of in the equipment being used. On the other hand, facilitating the collecting of partial samples may be useful from the point of view of enhancing the overall operation of the equipment.

JPH06346430 discloses a solution to sample soil easily without requiring power by means of a very simple device. An auger screw having approximately the same pitch of spiral wings from the top to the bottom is revolved to advance from the ground surface into the ground by using an appropriate driving source, and at that time, the auger screw is so revolved that it is made to advance in the ground by one pitch of the spiral wings per revolution. In this way, after the auger screw has been made to advance to the required depth in the ground, the auger screw is pulled out from the ground without revolution, and after that, the soil adhering to the auger screw forms a sample.

US4763702 discloses a portable feed material transferring and bagging apparatus that includes a transfer conveyor and a bagging unit both mounted on a mobile frame. The bagging unit is mounted such that its position can be vertically adjusted to various elevations to accommodate filling bags of different sizes.

CN2531379 discloses a spiral cutting type sampler that comprises a transmission shaft and a sampling head which are connected together, which is characterized in that the sampling head consists of a cylinder cutter being sleeved on periphery of a spiral cutting lifter, and the transmission shaft consists of a hollow shaft being sleeved on periphery of a central shaft; and the hollow shaft is tightly connected to the cylinder cutter, and the central shaft is tightly connected to the spiral cutting lifter. The spiral cutting lifter consists of thread rotating slice being welded along an external wall of a section of pipe; and an upper part of the thread rotating slice is matched with an intracavity of a cone cylinder wall. A lower section of the central shaft is tightly connected to a square-cone crushing head whose upper part is provided with a square cylinder and lower part is provided with a square cone, and four edges, a cone edge and a silicon tip of a clockwise cylinder are lined with cemented carbide edge strips. The utility model is not influenced by large-block material and water, which can fast and accurately sample in any depth and position of the loaded materials inside train and automobile carriages, therefore being without viscous plugging and sample mixing.

FR 2996305 discloses a system that has a sampling device with an endless screw, a measuring chamber for continuous measurement of parameters of materials e.g. powder material, in a pile, and a discharge chute. The sampling device is arranged on a support so as to be depressed and emerged from the pile. The support is arranged to be movable on a gantry. The sampling device is utilized for sending the materials taken towards the chamber for continuous monitoring of the discharge chute. The endless screw is placed in a tube. An independent claim is also included for a method for measurement of parameters of materials in a pile.

AU8859082 discloses a sampling device utilizing an auger within a casing.

EP0330829 and EP0327667 disclose a boring device sampling material. The bore is taken out of the sampled material, and the material is dispensed in partial samples to few sample recipients.

EP2765099 discloses a granular material recipient filled gradually with the material by an auger dispenser. In order to avoid the air being trapped, the auger filler is gradually moved up in respect to the bottom of the filled recipient.

### Brief disclosure

The invention is disclosed in the independent claims. Some embodiments of the invention are specified in the dependent claims.

### Brief description of the figures

The invention is now described in closer detail with reference to the accompanying drawings, in which:
Figures 1A to 2B illustrate some embodiments,
Figure 3 illustrates a sampling system,
Figures 4 to 6 disclose some embodiments,
Figure 7 shows a flow chart according to an embodiment.

### Description of some embodiments

The revolution of bioenergy and distributed energy production also bring along challenges. A challenge may be formed by the characteristics of the biomass used as the fuel for energy production. Wood chips, for example, may absorb moisture when stored and consequently produce less energy when being burned. In the same manner, the moisture content of peat may vary depending on, for example, the amount of rain during the production period. So, non-ideal conditions may affect the characteristics of biomass. For example, the surface layer of biomass in a tank may contain snow in winter time, but there may be drier material beneath the surface layer.

On the other hand, it is also possible that biomass, such as wood chips, include a plurality of different materials that may exhibit different burning characteristics. A batch of wood chips, for example, may have chips of both birch and spruce, which may have different burning characteristics (for example, energy produced per cubic metre).

For the above reasons, for example, it may make sense to take one or more samples from different parts of the biomass. It may make particular sense to sample a granular material (such as granular biomass or granular fossil fuel) by carrying out boring in the material so that the potential impurities in the surface layer do not entirely mess up the sample. On the other hand, taking samples from the surface layer, only, may give too good a view of the material characteristics, if the surface has been drying in the sun for a long time, for example.

In addition, when boring a granular material (or material in general), some of the material may stick to the bore. In other words, if a plurality of loads are sampled with the sampling equipment, the material stuck to the bore from a previous load may mess up the sampling of the subsequent loads. Often, the amount of material a sample contains or requires may be relatively small, so even the smallest impurities may significantly affect the results the samples provided.

In one exemplary sampling, the sampling equipment may perform six borings into granular material in a tank or load (from hereafter either granular material or material). From each boring, which may also be referred to as samples, a so-called partial sample may be stored, in which the partial samples are collected in a sample collector. The six partial samples collected in the sample collector may constitute the actual sample from which the characteristics of a material in a tank may be examined. From this perspective, too, it may be sensible that the material samples acquired from the borings do not mix up so that the actual load or tank specific sample in the sample collector is as good as possible.

For the reasons described in the above, for example, it may be sensible to develop a new kind of sampling equipment and method in which the self-cleaning ability of the bore or a bore part of the sampling equipment may be improved. This may result in a decrease of the amount of impurities, such as material from another load or from the same load but from a different spot, in the sample. Knowing the characteristics of the material load-specifically, for example, may provide major benefits for the operation of a power plant, for example. As an example, adjustment of the air-fuel mixture of a power plant might be mentioned, in which power plant it is possible to burn more substitute fuel in case the moisture content of wood chips increases and, in turn, less substitute fuel when the moisture content of wood chips decreases.

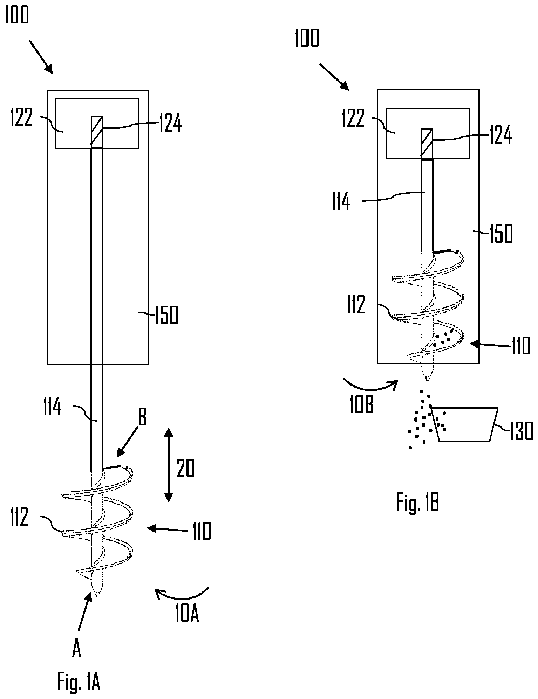

Figures 1A and 1B show an example of the sampling equipment and its operation. The sampling equipment may be a device 100 for boring samples from material including granules in an at least partly enclosed space (e.g. a tank). With reference first to Figure 1A, the device 100 comprises a sampling head 110. The sampling head comprises a bore part 112. The device 100 additionally comprises means 122 for linearly moving the sampling head 110 into the material and out of the material, and means 124 for producing a drilling movement for the bore part 112 by rotating the bore part 112, wherein the sampling head 110 is adapted to be placed in the material with the tip portion of the sampling head 110 first as the bore part 112 is drilling into the material. Referring secondly to Figure 1B, the bore part 112 is additionally adapted to rotate while the sampling head 110 is off the material to empty the sampling head 110 and to collect a partial sample to the sample collector 130 from the material removed from the sampling head 110. In addition, the sampling head 110 is open, like the tip portion, on at least one second point so that the material granules in mechanical contact with the bore part 112 may become replaced as the bore part is drilling into the material. This may also be understood so that the material may become replaced as the bore part 112 is drilling into the material and/or is drilling within the material.

Referring specifically to Figure 1A, the open point of the tip portion of the sampling head is indicated by the arrow A, and at least a second open point of the sampling head is indicated by the arrow B. By traditional boring of a material, the bore part 112 moves to a specific depth in the material, until which material will gather in the bore part 112. When the bore part 112 is substantially full of material, no new material will substantially collect in the bore part 112 because no new material fits in the bore part 112. So, this takes place when the sampling head 110 is not open in at least a second point in addition to the tip portion. But when, like in the exemplary embodiments of Figures 1A and 1B, the sampling head comprises said at least second open portion, the material is able to become replaced in the bore part 112 as the bore part is moving deeper and deeper into the material and even if the bore part 112 were full of material being bored. In other words, said at least second open point on the sampling head (such as the bore part, as in Figures 1A and 1B), makes it possible for the material to become replaced in the bore part as the material is being bored.

The material granules in mechanical contact with the bore part 112 may become replaced as the bore part 112 is drilling into the material and within the material, and consequently clean the bore part 112 and also make it possible to take samples from deeper than the length of the bore part 112. If the sampling head 110 did not have at least a second open point in addition to the tip, the length of the bore part would have to be at least as long as the depth from which the sample is desired. By the use of at least a second open point on the sampling head 110, the sample may be taken from an equal depth by using a shorter bore part 112, and therefore the structure of the device 100 may be made simpler. In addition to the described automatic cleaning feature, also manual cleaning may be easier, because the bore part 112 need not have as many threads, which are potentially difficult to clean. By means of the device 100 according to Figures 1A and 1B, the boring depth may be influenced by the total length of the sampling head 110 (for example, the length of the arm 114). The length of the arm 114 may be adjustable. As an example of this, arm parts that go inside each other may be mentioned, which allow the length to be adjusted. Other solutions for adjusting the length of the arm 114, obvious for a person skilled in the art, may also be used.

Further referring to Figures 1A and 1B, the device 100 may comprise a body 150, which comprises one or more elements of the device 100, such as means 122 and/or means 124. For example, the arm 114 and/or sampling head 110 may be arranged to be substantially inside the body 150 at the material emptying stage from the bore part 112 (see, Figure 1B, for example). The body 150 may comprise a protective tube inside of which the sampling head 110 is adapted and dimensioned to fit (at least partly). The protective tube may protect the sampling head and/or other parts of the equipment when the sampling head 110 is not used for boring. A protective tube is not necessarily necessary. In addition, in at least some embodiments, the different parts of the device 100 may together form the body of the device 100. The protective tube may be open so that the sampling head 110 may be pulled inside it.

The means 122, 124 are now described in somewhat closer detail, as well as the paths of the sampling head they cause/enable. For example, the device 100 may comprise one of more motors (e.g. a servo motor) to make possible a linear movement of the sampling head 110 and a rotary movement of the bore part 112. In Figure 1A, the linear movement of the sampling head 110 is shown by the arrow 20, which illustrates the up and down movement (vertical movement) of the sampling head. In some embodiments, the means 122 cause the vertical movement of the sampling head 110. In other words, the sampling head 110 may be lowered or placed in the material and also lifted out of it. In some embodiments, the means 122 may also cause the horizontal movement of the sampling head 110 and/or device 100, by means of tracks, for example.

Still referring to Figures 1A and 1B, the means 124 may thus generate the rotary movement of the bore part 112, with which the bore part 112 may drill into the material from which a sample is wanted. Arrow 10A illustrates the direction of rotation (a so-called filling direction) of the drilling stage in the example of Figure 1A. Arrow 10B illustrates the direction of rotation of the emptying stage (a so-called emptying stage) in the example of Figure 1B, where the means 124 are adapted to cause the rotation into the emptying direction. In other words, in an embodiment, the bore part 112 is adapted to rotate into the filling direction 10A as the bore part 112 is drilling into the material, and into the emptying direction 10B, opposite the filling direction, to empty the sampling head 110. At the emptying stage, it may be advantageous if the sampling head 110, or at least the bore part 112, is off the material so that all the material in the sampling head 110 may get off. If the sampling head 110 substantially consists of only the bore part 112, it may be enough that the bore part 112 is off the material.

In an embodiment, the device 100 does not have the means 122 and/or means 124. In other words, it is possible that the device 100 operates without them. The sampling head 110, for example, may be manually handled, and the rotary movement of the bore part 112 may be manually generated. To put it in yet another way, in an embodiment the device 100 includes the sampling head 110 which comprises the bore 112.

To return to the means 122 and 124, it should be noted that the rotary movement of the bore may be created by a dedicated motor. On the other hand, the linear movement of the sampling head (for example, vertical movement) may be created by its own motor. It is also possible that in some embodiments both movements (that is, rotary movement and linear movement) may be established with one motor, such as a servo motor. In some embodiments, the feed movement (e.g. a belt) of the motor or motors is converted into rotary movement by an appropriate element. So, the bore part 112 may thus be made to rotate. The appropriate element referred to may be a ball-race screw, for example. In some embodiments, the motor (e.g. a servo motor) rotates the bore part 112 directly (so, the motor rotating means may be directly coupled or attached to the bore part 112). For example, one servo motor may generate the up and down movement and a second servo motor the rotary movement. The movement sequences of the sampling head 110 and the bore part 112 will be described in closer detail below.

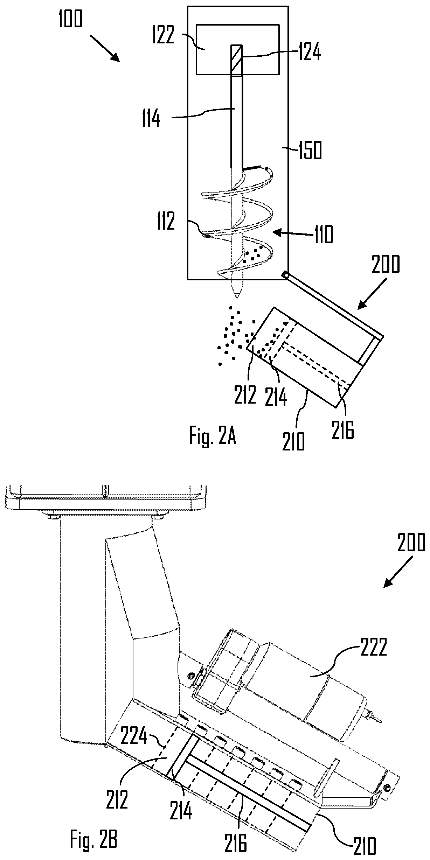

Figures 2A and 2B show a device 200 suitable for collecting samples. The operation of the device 200 of Figure 2A is described together with the device 100 shown in Figures 1A and 1B. In other words, the device 200 suitable for collecting samples is used together with the device 100 suitable for taking samples. In some embodiments, the devices 100 and 200 form one device or device entity. In some embodiments, the devices 100 and 200 constitute a system for taking samples from a granular material or granular mass (e.g. biomass).

With reference to Figure 2, said device 200 suitable for collecting samples comprises a sample collector 200 which is adapted to cooperate with the sampling head 110 boring samples, wherein the sample collector 200 comprises a tank 210 adapted and dimensioned to store a plurality of partial samples out of the samples bored by the sampling head 110. The sample collector 200 comprises an adjustment member 214, 216, which is adapted to change the volume of a sample section 212 of the tank 210, adapted to collect the partial samples, so that there is room in the sample section 212 substantially only for the amount of material from the first sample corresponding to the volume of the partial sample, and in which the adjustment member 214, 216 is additionally adapted to increase the volume of the sample section 212, after the collection of the partial sample collected from the first sample, by an amount corresponding to the volume of a partial sample of a second sample.

It should be noted that the device 200 or the sample collector 200 do not necessarily need a device 100 according to Figure 1A and/or 1B in order to work, but it may work with other kinds of samplers. However, the use of the devices 100 and 200 together may be beneficial, in the form of, for example, facilitating the self-cleaning of the sampling head and the collection of samples by means of the device 100 according to Figures 1A and 1B.

With reference to Figure 2B, the sample collector 200 may comprise a power generating source 222, operatively coupled to the adjustment member 214, 216. The power generating source 222 may be used to adjust the size of the sample section 212 in the tank 210. The dotted lines in the Figures denote the virtual bottoms of the tanks, wherein by way of example the area surrounded by two dotted lines within the tank 210 is the volume substantially corresponding to the volume of one partial sample. In some embodiments, the volume of the partial samples is substantially the same. In some embodiments, the volume of the partial samples varies.

When the piston 214 of the adjustment member is at the top dotted line 224, the volume of the sample section 212 may substantially correspond to zero. In other words, no samples will fit in the tank in such a case. This may be possible if, for example, there is an opening in the bottom of the tank at the top dotted line 224, or in its vicinity, through which material is able to flow off the area of the tank 210 On the other hand, the top dotted line 224 may be substantially at the level of the filling hole edge of the tank, whereby when the piston 214 of the adjustment member is at the level of the dotted line 224, partial samples will not fit in the tank.

Still referring to Figure 2B, the piston 214 of the adjustment member may be moved with an adjustment arm 216. The adjustment arm 216 may be mounted to the piston 214 and, on the other hand, operatively coupled to the power generating source 222, whereby by adjusting the arm 216, the position of the piston 214 within the tank 210 may be changed. In some embodiments, the position of the piston 214 may be manually changed without the power generating source 222. The power generating source 222 may comprise a hydraulic pump and/or motor, for example.

The piston 214 may thus be positioned in the tank at each dotted line shown in Figure 2B, whereby the volume of the sample section 212 may be adjustable. The piston 214 may be adapted and dimensioned so that at least some of its edges set against the surface of the tank 210. The dimensioning may be carried out either by modifying the inner dimension of the tank 210 or the outer dimension of the piston. Therefore sample material cannot flow from the sample section 212, past the piston 214, to elsewhere in the tank 210, whereby the desired partial sample or partial samples stay in the sample section 212, from where they may later be removed by, for example, moving the piston 214 to its extreme position at the level of the filling hole of the tank 210.

As noted in the above, one or more partial samples may fit in the sample section 212 at a time. For example, the piston 214 may at first be so adjusted that material matching the quantity of the first partial sample fits in the sample section 212 (so, to the extent of one partial sample). After this, the position of the piston 214 may be adjusted so that two partial samples fit in the sample section 212. So in this case, the sample section 212 will accept additional material to the extent that matches the amount of the second partial sample, if the first partial sample has been obtained in the sample section 212 in its entirety. The first and second partial samples may both be collected from their own sampling head boring. In the same manner, the volume of the sample section 212 may be increased when new samples taken from borings by the sampling head are collected in the tank. This way it may be made certain that a single boring does not produce substantially more material in the tank 210 than one partial sample represents. Consequently the results provided by a total sample taken from a load may be more reliable.

In an embodiment, with reference to Figures 2A and 2B, the adjustment member 214, 216 comprises a piston 214, which is adapted and dimensioned to cooperate with the piston rod 216 so that the position of the piston 214 within the tank 210 may be changed, wherein the piston 214 has such an outer dimension that it forms, together with the inner wall of the tank 210, the sample section 212 of the tank 210, and wherein the piston 214 is adapted to act as the bottom of the sample section 212. The piston rod 216 may be adapted to operate in such a manner, for example, that by changing its position the piston 214 moves. For example, if the piston rod 216 is substantially perpendicular to the bottom of the tank 210, the piston 214 may be at the top position. By setting the piston rod 216 in a slanted position, the piston 214 may move towards the bottom of the tank 210, thus enlarging the volume of the sample section 212. As noted in the above, other kinds of adjustment options exist. To take an example, rods within each other may be mentioned, which go at least partly within each other, and consequently make it possible to adjust the rod length. The piston rod 216 may be operationally coupled to the power generating source 222.

In an embodiment, with reference to Figures 2A and 2B, the sample section 212 is adapted to be emptied so that the piston 214 is at least partly pushed to the level of the filling hole of the tank 210. Pushing or setting may be carried out with the piston rod 216, which obtains its pushing energy from the power generating source 222, for example. Emptying may be carried out once an adequate quantity of partial samples have bee collected in the tank, forming the total sample or sample of the material. Emptying may also be performed for cleaning the tank, for example, several times consecutively. This way, grime may be better removed from the sample section. Emptying may be performed in a sample tank, for example (emptying for cleaning purposes may be performed in a waste dump, for example). So, the device 200 or sample collector 200 may be movable. The sample collector 200 may thus include a motor by means of which the moving may take place. On the other hand, the sample collector may be fixed to the device 100 (that is, the sampler), whereby by moving the device 100, the position of the sample collector 200 may also be changed.

In an embodiment, the surface of the piston 214, adapted to act as the bottom of the sample section 212, is treated with a dust-resistant material. Bottom here refers to the inner surface of the bottom of the sample section 212. In other words, at least a subgroup of the partial samples are adapted to set against said surface of the piston 214. The treatment by a dust-resistant material may comprise, for example, painting by a dust-resistant paint. On the other hand, a layer of material may be attached to the piston 214, which has a relatively low friction coefficient. For example, if the piston is made of metal, the piston 214 surface may be polished to make it more slippery. The purpose may thus be to increase the slipperiness of the piston surface and this way reduce the amount of material that adheres to and sticks on the surface of the piston 214.

As suggested in the above, one viewpoint is to develop an automated sampling robot, which may be adapted to take the samples directly from a truck transporting biomass (for example, granular biomass) before the load is unloaded to the fuel storage at the power plant. A sampling station, which may comprise a sampling robot, may be positioned in a logically suitable place at the power plant site, such as at a scale station where the truck is also weighed. The sampling robot (comprising a sampler or more generally the device 100) may be automated so that it takes single samples (in other words, partial samples) from the truck and gathers the single samples into a load-specific sample, as set forth in the above. The gathering may takes place into the sample collector 200, for example. In addition to this, a sampling robot may collect load-specific samples into daily consolidated samples supplier-specifically, for example. The sample collector 200 may be part of the aforementioned sampling robot. It is also possible that it is a separate part.

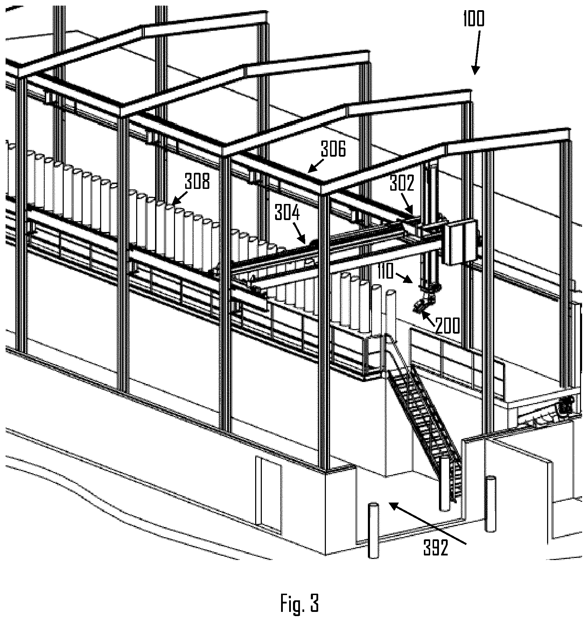

Figure 3 illustrates a sampling system. Figure 3 illustrates the device 100 (that is, the sampling head 110 and possibly other parts, as described in the above) and the sample collector 200. In an embodiment, Figure 3 shows an embodiment of the device 100, which comprises at least a sampling head 110, sample collector 200 and means for moving the sampling head 110 and/or sample collector 200 in addition to the vertical movement and drilling movement. In other words, the sampling head 110 and/or sample collector 200 may additionally be moved laterally and/or longitudinally, for example.

In an example, not being part of the invention, the device 100 comprises a carriage 302 operationally coupled to the sampling head 110 and/or sample collector 200. The carriage 302 may be fixed to the sampling head 110, for example. In addition, the sample collector 200 may be fixed to the sampling head 110 and/or carriage 302. The carriage 302 may be adapted and dimensioned to move along a bridge 304. Hence, the carriage 302 may be used to transfer the sampling head 110 and/or the sample collector along the bridge 304. As the power generating source, there may be a motor, such as an electric motor. So, the sampling point of the sampling head 110 may be adjusted load-specifically in at least the lateral direction of the load, as shown in Figure 3. In the example of Figure 3, the load may drive in (or exit) in the direction of the arrow 392. So, by means of the bridge 304, the position of the carriage 302 may be transferred in at least the lateral direction of the load. In some embodiments, the carriage 302 and bridge 304 may be used to change the longitudinal position. In such a case, a lateral movement is not necessarily possible/necessary.

In an example, not being part of the invention, the device 100 additionally comprises a body (such as a portal body) and a track 306 connected thereto. The track 306 may be used to change the position of the bridge 304. Thus, in the example of Figure 3, the track 306 makes possible the longitudinal movement whereby the position of the sampling head 110 and/or sample collector 200 may be changed both in the longitudinal and lateral direction of the load. In other words, the joint use of the carriage 302, bridge 304, and track 306 may allow the horizontal movement of the sampling head 110 and/or sample collector 200 in at least two different dimensions. So, in at least four different directions (e.g. to the left, right, forward, and backward). For a person skilled in the art, this is obvious based on Figure 3. The described function may make the operation of the sampling head 110 more diverse, because now the sample may be taken at a plurality of desired points as the carriage 302 is moving along the bridge 304 and/or as the bridge 304 is moving along the track 306 or the portal body.

The sampling device 100 shown in Figure 3, for example, may operate in such a manner that it bores a single sample, with the volume of approximately three litres, from the load by changing the boring depth and location. The changes in the location may take place with the means described in connection with Figure 3, and the boring depth with the means described in connection with Figures 1A to 2B. In some embodiments, the carriage 302 or bridge 304 may additionally be adapted to move vertically. This may increase the potential of the adjustment in the depth direction.

The sampling device 100 may thus collect the single samples (e.g. 6 pcs.) into a load-specific sample into the sample collector 200 moving with the sampling head 110. Both may therefore be a part of the sampling device 100. The sample collector 200 may be emptied into a supplier or fraction specific drop pipe 308 through which the sample may drop to a mixing tank below. The sampling device 100 may comprise one or more drop pipes 308 underneath of which said mixing tank may be located. At the top end of the mixing tank there may be a gate valve which opens when the sample collector 200 drops a sample into the drop pipe. The gate valve may be adapted to close automatically by time control. In the mixing tank, all the samples arrived during the same day, for example, may be collected, each into its own supplier/fraction-specific tank. Hence, some embodiments may have a mixing tank supplier-specifically, for example. In other words, the device 100 may contain a plurality of mixing tanks or mixing tank sections.

In some examples, not being part of the invention, a sample is collected from a mixing tank manually (e.g. at the end of each day). Collecting the sample may take place so that the motor of the mixing tank is started to mix the sample. A bucket may be placed on a platform under the mixing tank, and the bottom of the mixing tank may be opened after mixing. The sample may flow into the bucket from the tank, and the overflow to a overflow belt underneath. The overflow belt may start at the same time the mixer starts. The overflow may be carried to a storage pile with the belt. Thus, in some embodiments the device 100 comprises mixing means (e.g. a motor) to mix the mixing tank or mixing tanks. In some embodiments, the device 100 comprises said overflow belt.

In some examples, sampling may also be performed so that load-specific samples are collected as single samples whereby a more accurate load-specific moisture analysis may be achieved. In such a case, the sample collector 200 of the sampler may be emptied into a dedicated load-specific drop shaft. At the bottom of the drop shaft there may be a bagging machine that bags up the load-specific sample. In addition, the device 100 may comprise a fuel data system from which an ID sticker may be printed for the sample, to be glued to the side of the bag. After this, the sample may be ready to be measured. Further, it is possible to integrate a quick moisture measurement (e.g. NMR or microwave measurement) into the end of the drop pipe whereby the moisture information is available immediately. Other measurements, too, may be incorporated into the drop pipe, such as temperature and particle size measurement.

In an embodiment, the device 100 comprises a sensor module adapted to measure one or more features of the material sample. The device 100 may comprise, for example, moisture measurement, temperature measurement and/or particle size measurement (e.g. particle size measurement based on computer vision). These sensors may be installed on the sample collector 200, for example. It may thus be possible to acquire measurement data right in connection with sampling and transmit it directly to the data system, for example, via a control unit of the device 100. So, it is possible to collect real-time or almost real-time data of the samples. In some embodiments, the sampling head 110 comprises one or more sensors. In such a case, the sampling head 110 may further improve obtaining sampling data.

In an example, not being part of the invention, the material to be sampled may be preprocessed. Preprocessing may contain, for example, mixing of the material and/or crushing of the material granules. Material may be crushed (that is, make the particle size smaller) before the material is sampled and/or analysed by the sensor module. In an embodiment, the device 100 comprises a preprocessing module which is adapted to preprocess the material being bored. In an embodiment, the preprocessing module is adapted to preprocess bored material which has been collected in the sample collector 200.

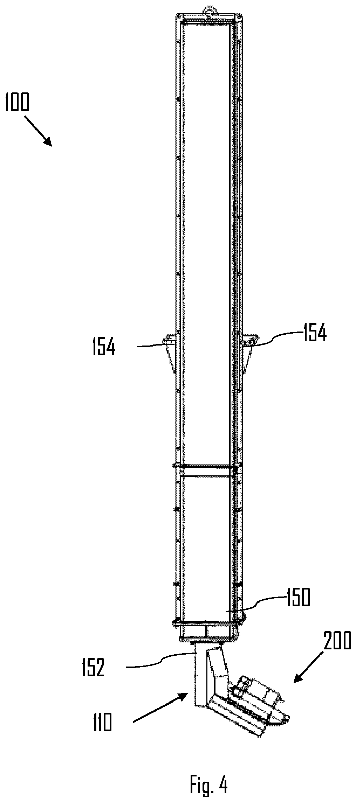

To return to the sampling equipment 100 and to be more precise to some of the solutions of the sampling head presented in the above in Figures 1A and 1B, it must be noted that the sampling head 110 and more generally the device 100 may also be implemented with solutions differing from what is presented in the above figures and the related description. It is again at this stage emphasized that the device 100 (in other words, the sampling head 110 at its minimum) may operate as an independent entity in cooperation with the sample collector 200. On the other hand, the aforementioned may be integrated into the same device. Thus, the device 100, for example, may comprise the sample collector 200. An example according to an embodiment is shown in Figure 4.

With reference to Figure 4, the device 100 is presented so that it includes the sampling head 110 and sample collector 200. The sampling head 110, or at least the bore part 112, is not seen, because it is withdrawn inside the protective tube 152 wherein the protective tube 152 is part of the body 150 of the device 100. Within the body 150 there may be an axle or arm 114 fixed to the bore part 112, wherein the bore part 112 is inside the protective tube 152. The sampling head 110 may comprise at least the bore part 112 and in some embodiments also a part of the axle or arm 114. Inside the body 150 there may also be the means 122 and/or means124, that is, one of more servo motors.

There may additionally be one or more attachment points 154 on the body 150, which may be used to attach the device 100 to a carriage (such as the carriage 302) operating on tracks. The attachment points 154 may be located at a plurality of places on the body 150. In an embodiment, they are placed in the area of the middle part of the body 150, in order to make the attachment more stable. This may mean, for example, that the attachments (e.g. at least two attachments) are on both sides of the centre of the body.

The sampling head 110 and the bore part 112 may emerge from the inside of the protective tube 152 by a suitable distance so that material boring is possible. At the emptying stage, the sampling head 110 may again retreat at least partly inside the protective tube 152, and the emptying into the sample collector 200 may be performed. In some embodiments, the device 100 does not have the protective tube 152.

In an embodiment, the protective tube 152 has substantially the shape indicated in Figure 2B. This means that the protective tube 152 may have a widening so that when the bore is rotated to empty it, the material on the leaves of the bore will fling on the entire length of the bore part (or at least substantially the entire bore part) due to centrifugal force to the widening and flow along it to the mouth of the collector 200. In an embodiment, this means that the inner edge of the protective tube 152 extends at least to the level of the sample collector mount or past it.

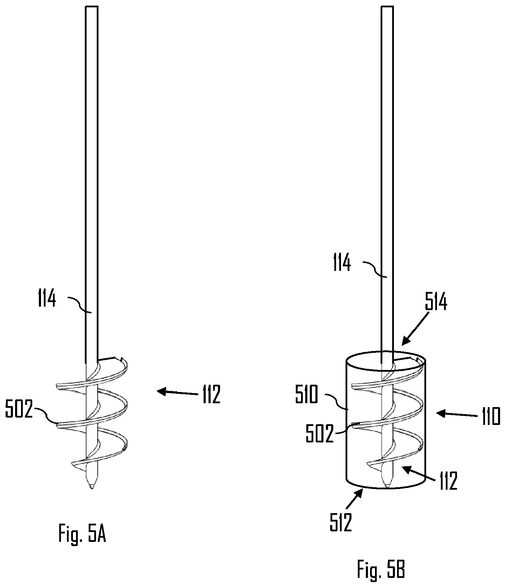

The structure of the sampling head 110 and the structure of the bore part 112 described in connection with Figures 1A and 1B may vary. Figures 5A and 5B show some embodiments of the sampling head 110 and/or bore part 112. Referring first to Figure 5A, the bore part 112 may comprise a stub bore or part bore. A stub bore may be so defined that the bore part 112 comprises a section that has at least one thread 502 and a second section that does not have a thread. Said second section may be a section or the arm 114 around which there is no thread. With a stub bore, the aforementioned cleaning advantages, for example, may be achieved, because once the thread 502 ends, the material is able to flow off the bore part or the bore part 112 is able to bore into the material so that the material in the bore part 112 may become replaced. If the thread 502 were to extend over the entire length of the arm 114, adjusting the length and self-cleaning may be more difficult to implement.

In some embodiments, referring to Figure 5A, in particular, the bore part 112 forms the sampling head 110. In such a case, the sampling head 110 does not include any other elements. The bore part 112 may thus independently operate as the sampling head 110. The benefit of the above may be the simplicity of the structure and, further, better management of the cleaning of the bore part 112. In addition to self-cleaning, the bore part 112 may in such a case be accessed without the need to dismantle parts from the sampling head 110 to give way to the bore part 112.

With reference to Figure 5B, in an embodiment the sampling head 110 additionally comprises an outer pipe 510 surrounding the bore part 112, the outer pipe having an open tip part 512 and comprising at least one blade, and wherein the outer pipe 510 additionally comprises at least one opening 514 through which the material is adapted to flow out from the sampling head 110 when at least the bore part 112 is rotating to the filling direction. As shown in Figure 5B, there may be a stub bore in the bore part 112. The outer pipe 510 may, for example, be used to enhance the drilling ability of the sampling head 110 into the material in a situation where the material has ice or branches in it, for example.

The outer pipe 510 may therefore comprise at least one blade which may be positioned in the area of the pipe edge. The outer pipe 510 may be hollow, so that the bore part 112 in it is able to rotate freely. The outer pipe 510 and/or bore part 112 may be dimensioned and adapted so that a gap is left between the outer edge of the bore part 112 and the inner wall of the outer pipe 510, which may be 0.1 cm, 1 cm, or 5 cm. A small gap enhances the fact that material may only become replaced through the open portions, that is, from an inlet opening 512 through an outlet opening 514 out of the sampling head whenever at least the bore part 112 is rotating to the filling direction. In other words, material is not able to drop off the bore part 112 and back in through the inlet opening 512 to, for example, the tank from which boring is carried out. In some embodiments, the outer pipe 510 does not have a blade, but it is for storing material, only.

In some embodiments, the outer pipe 510 is adapted to rotate with the bore part 112. In such a case, the drilling ability of the sampling head 110 into the material may be enhanced. The outer pipe 510 may be rotated with the same power generating sources as the bore part 112 or with a separate power generating source. The outer pipe 510 may be, for example, operatively coupled to the bore part 112 so that it rotates with the bore part 112. In some embodiments, the outer pipe 510 and the bore part 112 are fixed to each other so that there is no substantial gap between the outer edge of the bore part 112 and the inner wall of the outer pipe. On the other hand, the fixing may also be performed at only one or two points, for example.

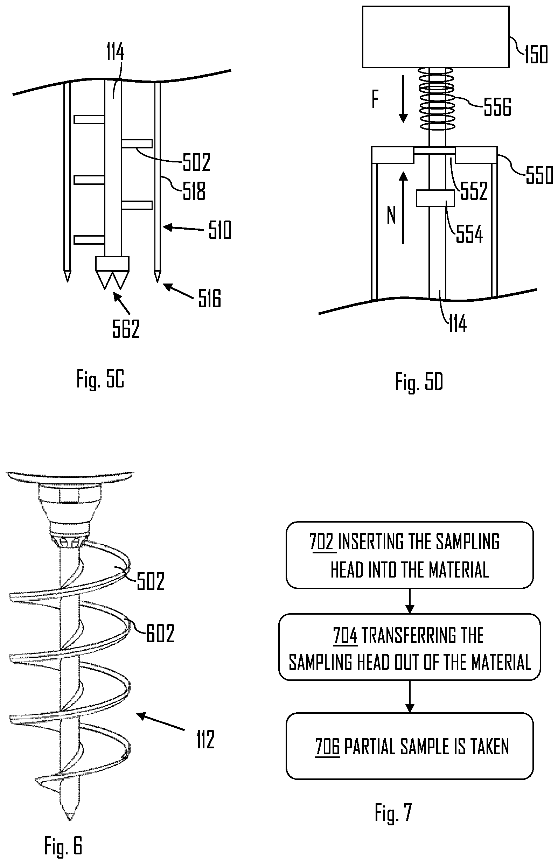

Figure 5C shows an embodiment showing the cross-section of the sampling head 110. Thus, the bore part 112 may comprise a thread 502 and at least part of the arm 114. Alternatively, the thread 502 may be implemented without the arm, too. On the other hand, instead of the thread, a set of blades may be used, which are adapted to drill into the material. The thread 502 in Figure 5C is to be understood as a continuous thread although the cross-section shows it as blades. However, in some embodiments the thread 502 may comprise a plurality of blades or the thread 502 may be replaced by the use of a plurality of blades.

The bore part 112 may comprise one or more blades 562. The blade(s) 562 may be located at the area of the tip of the bore part 112. The blade 562 is (the blades are) adapted to drill into the material. In addition, Figure 5C shows the outer pipe 510 in which the wall 518 of the outer pipe 510 is positioned so that it does not touch the bore part 112. In other words, the bore part 112 may rotate without the outer pipe 510 rotating. At the edge of the inlet opening of the outer pipe 510 there may be one or more blades 516 that may be adapted to intensify the drilling of the bore part 112 into the material. The one more blades 516 may be located on the wall of the outer pipe 510, as shown in Figure 5C. In other words, the wall 518 may also act as the blade of the outer pipe 510.

In an embodiment the device 100 or the sampling head 110 additionally comprises a coupler 552-556 operationally coupled to the outer pipe 510, wherein when the coupler 552-556 is at a first position, the outer pipe 510 does not rotate, and wherein when the coupler 552-556 is at a second position, the outer pipe 510 rotates with the bore part 112. An example of this may be seen in Figure 5D.

With reference to the example in Figure 5D, the coupler 552-556 may comprise a spring 556 and a friction coupler 552, 554, wherein the friction coupler 552, 554 switches to a second position when the spring 556 that is operationally coupled to the friction coupler 552, 554 is subjected to a force at least of the magnitude of said predetermined value. In the example of Figure 5D, the spring is fixed to the body 150 of the device 100. When the material resistance encountered by the bore part 112 increases past the threshold value, a beam 554 sets itself (at least partly) in a notch 552, and the outer pipe 510 starts to rotate with the bore part 112. This way, the boring efficiency of the sampling head may be increased. When the material resistance decreases below the threshold, the beam 554 exits the notch 552, and the rotation of the outer pipe 510 stops. The threshold value may be adjusted by selecting a different spring or by using an adjustable spring the amount of springback factor of which is adjustable. In Figure 5D, the beam 554 starts to slide towards the notch 552 (notch 552 is part of the outer pipe 510) when the value of N increases past the value of F. In other words, the supporting force which is caused by the material and which the bore part 112 is subjected to increases past the springback factor produced by the spring.

The solution put forth in Figure 5D should be understood as an example. The described functionality (that is, the outer pipe 510 starts to rotate with the bore part 112 when the material resistance exceeds the threshold) may also be implemented with couplers of various kind, such as with an electronic coupling based on various sensor solutions. A power sensor or a pressure probe may be located at the sampling head 110, for example, to detect the quantity of material resistance. Once the threshold is exceeded, the outer pipe 510 may be electronically brought to rotate with the bore part 112. When a below threshold condition is again reached, the rotation of the outer pipe 510 may be stopped.

In an embodiment the coupler 552, 554, 556 comprises a friction coupler 552, 554 which is adapted and dimensioned to be a the second position when the material resistance produced by the material and met by the sampling head 110 is at least as high as a predetermined value. In an embodiment the friction coupler 552, 554 switches to the second position when the spring 556 that is coupled to the friction coupler 552, 554 is subjected to a force at least of the magnitude of said predetermined value. These are exemplified in Figures 5C and 5D.

In an embodiment, the coupler 552-556 locks the outer pipe 510 to rotate with the bore part 112 when said threshold value is exceeded. The outer pipe 510 thus rotates at the same speed as the bore part 112, like in the example of Figure 5D.

With reference to Figure 5B, said at least one open point 514 may be located at the top surface or wall of the outer pipe 510, for example. So, the open point 514 may be located at the area where the thread 502 of the bore part 112 ends, for example. In such a case, material may become replaced (off the sampling head 110) at the area where the thread 502 of the bore part 112 ends. The open point 514 or open points may be dimensioned, adapted and positioned so that when the bore part 112 is rotating to the filling direction while the sampling head 110 is off the material, the material flows to the sample collector 200 from the bore part 112. Thus, the filling direction, too, may be used to collect a partial sample into the sample collector 200. It is therefore not necessary in every embodiment for the bore part 112 to rotate to at least two directions, because collecting material to the bore part 112 and its removal from there may in some embodiments also take place by rotating the bore part 112 to one direction, only.

Figure 6 shows an embodiment where the thread 502 of the bore part 112 has a shape that retains material in the bore part 112. Retaining refers to that the aim is to keep the material at the area of the thread of the bore from the area of the inlet opening of the bore part to the outlet opening of the material (e.g. to a point where the bore thread ends). The retaining shape ma be implemented both with and without the outer pipe 510.

With reference to Figure 6, the thread 502 may comprise a wall 602. The wall 602 may reduce the flow of the material from the bore part at the area of the thread 502. The same effect may be accomplished by making the thread concave so that the thread 502 forms a concave surface or valley that retains material on the thread 502. On the other hand, by dimensioning the thread 502 so that its outer edge is higher than the inner edge may create the same effect. For a person skilled in the art, it will be obvious which way the concave surface needs to be made to achieve the retaining effect to the thread (that is, the concave surface toward the lifting direction of the sampling head 110).

In an embodiment, the thread 502 of the bore part 112 is disc-like. The concave surface of the disc-like shape may face the lifting direction of the bore part 112. This serves the purpose of aiming to retain the material on the bore part 112 in particular when the bore part 112 is lifted out of the material. By this, it may be ensured that an adequate amount of material is lifted to the sample collector 200 from each boring. It may be beneficial that the disc-like shape of the thread 502 is implemented with a gentle angle that substantially differs from a 90-degree bend. This may add to the operational reliability of the self-cleaning property of the bore part 112.

Figure 7 shows a method of taking a sample with a sampling device from granular material in an at least partly enclosed space, the method comprising: inserting a sampling head at least partly into the material so that a bore part of the sampling head rotates, while being placed, for at least a partial rotation in order to collect material in the sampling head (step 702), transferring the sampling head out of the material (step 704), and rotating the bore part for at least a partial rotation so that at least a part of the material in the bore part flows out of the bore part, wherein at least part of the material flowing off is led to a sample collector (step 706), wherein at least part of the material flows to the sampling head through an open tip section of the sampling head and out of the sampling head along the bore part through at least one second open section of the sampling head as the bore part is rotating in a filling direction in the material.

The described method is next examined in closer detail in relation to Figures 1A and 1B. As is apparent, the method according to Figure 7 may be carried out by the devices described in Figures 1A and 1B. The movement sequence of the sampling equipment may be as follows: the sampling head 110 is lowered into the material as the bore part 112 is drilling into the material. Once a specific depth is reached, the rotary movement of the bore part 112 may be stopped. The sampling head 110 may be lifted out of the material, the sampling head 110 having sample material. The sampling head 110 is emptied by rotating the bore part 112 to the emptying direction and a partial sample is collected from the emptying flow with the sample collector 200. The emptying direction may in some embodiments without the outer pipe 510 be opposite in relation to the filling direction. With an outer pipe, the emptying direction may be either the same or different in relation to the filling direction, because by rotating to the filling direction material may exit through an opening 514 of the outer pipe 510 from where it may be further led to the sample collector 200.

In an embodiment the device 100 and/or sample collector 200 comprise(s) a control unit. The control unit may be adapted to control the operation of the sampling head 110 and/or sample collector 200. The control unit may comprise one or more processors and one or more memories comprising a software code. The software code may be adapted to cause the carrying out of the method described in Figure 7, for example, in cooperation with one or more processors. The control unit may further comprise a user interface by means of which the parametres of the sampling equipment (that is, the device 100 and/or sample collector 200) may be changed by a user.

To get back to the method, the sampling equipment may be adapted to make a plurality of borings per tank or load. For example, it is possible to carry out four or six tank-specific borings, for example. As noted, a partial sample may be taken from each boring to the sample collector 200. The volume of a partial sample may be 0.5 litres, for example. This may be achieved by the solutions described in connection with Figures 2A and 2B, for example (in other words, by adjusting the size of the partial sample section 212). So, if six partial samples of half a litre are taken, the volume of the actual sample is three litres.

For example, the sampling equipment is adapted to carry out sampling in accordance with the standard SFS-EN 14778, in which the sample size must be approximately 3 litres. Sampling may take place load-specifically.

For example, the sample has to be substantially three litres, approximately. So, this means that said three-litre sample, comprising a plurality of partial samples, needs to be collected to the sample section 212 of the sample collector 200 load-specifically.

For example, the control device is adapted to cause the sample boring at a plurality of points in the material load or tank. The user may set the boring points or they may be randomly chosen.

A person skilled in the art will find it obvious that, as technology advances, the basic idea of the invention may be implemented in many different ways. The invention and its embodiments are thus not restricted to the above-described examples but may vary within the scope of the claims.

## Claims

1. A sampling device (100) for sampling granular material in an at least partly enclosed space, the device (100) comprising:
a sampling head (110), which comprises a bore part 112),
means (122) for linearly moving the sampling head (110) into the material and out of the material,
means (124) for producing a rotary movement for the bore part (112) by rotating the bore part, and
wherein the sampling head (110) is adapted to be placed in the material with the tip portion of the sampling head first as the bore part (112) is drilling into the material, and wherein the sampling head (110) is open, like the tip portion, on at least one second point so that the material granules in mechanical contact with the bore part (112) may become replaced as the bore part (112) is drilling into the material,
**characterized in that** the bore part (112) is additionally adapted to rotate while the sampling head (110) is off the material to empty the sampling head (110) and to collect a partial sample to a sample collector (200) of the sampling device (100) from the material removed from the sampling head (110), the sample collector (200) adapted to cooperate with the sampling head (110) boring the samples,
and **in that** the sample collector (200) comprises a tank (210) adapted and dimensioned to store a plurality of partial samples out of the samples bored by the sampling head (110), and an adjustment member (214, 216), which is adapted to adjust the volume of a sample section (212) of the tank (210), the sample section (212) adapted to collect the partial samples, so that there is room in the sample section (212) substantially only for the amount of a first partial sample of a first sample, the adjustment member (214, 216) additionally adapted to increase the volume of the sample section (212), after the collection of the first partial sample, by an amount corresponding to a volume of a second partial sample of a second sample such that both the first and second partial samples fit in the sample section.

2. A sampling device (100) as claimed in claim 1, wherein the bore part (112) is adapted to rotate into a filling direction (10A) as the bore part (112) is drilling into the material, and into an emptying direction (10B), opposite the filling direction, to empty the sampling head (110) when the sampling head (110) is off the material.

3. A device as claimed in claim 1 or 2, wherein the bore part comprises a stub bore.

4. A device as claimed in any one of claims 1 to 3, wherein the bore part forms the sampling head.

5. A device as claimed in any one of claims 1 to 4, wherein the thread of the bore part has a shape that retains material in the bore part.

6. A sampling device (100) as claimed in any one of claims 1 to 5, wherein the adjustment member (214, 216) comprises a piston (214), which is adapted and dimensioned to cooperate with the piston rod (216) so that the position of the piston (214) within the tank (210) may be changed, wherein the piston (214) has such an outer dimension that it forms, together with the inner wall of the tank (210), the sample section (212) of the tank, and wherein the piston (214) is adapted to act as the bottom of the sample section.

7. A sampling device (100) as claimed in claim 6, wherein the sample section (212) is adapted to be emptied so that the piston (214) is at least partly pushed to the level of the filling hole of the tank (210).

8. A sampling device (100) as claimed 6 or 7, wherein the surface of the piston (214), adapted to act as the bottom of the sample section (212), is treated with a dust-resistant material.

9. A device as claimed in any one of claims 1 to 8, wherein the sampling head additionally comprises an outer pipe surrounding the bore part, said outer pipe having an open tip part and comprising at least one blade, and wherein the outer pipe additionally comprises at least one opening through which the material is adapted to flow out from the sampling head when at least the bore part is rotating to the filling direction, wherein the device additionally comprises a coupler operationally coupled to the outer pipe, wherein when the coupler is at a first position, the outer pipe does not rotate, and wherein when the coupler is at a second position, the outer pipe rotates with the bore part.

10. A device as claimed in claim 9, wherein the coupler is a friction coupler adapted and dimensioned to be at a second position when the material resistance produced by the material and encountered by the sampling head is at least as high as a predetermined value, wherein the friction coupler switches to the second position when the spring that is coupled to the friction coupler is subjected to a force at least of the magnitude of said predetermined value.

11. A device as claimed in any one of claims 1 to 10, which additionally comprises a sensor module adapted to measure the moisture of the material in the sample collector (200).

12. A device as claimed in claim 11, wherein the sensor module is adapted to transmit real-time moisture measurement data to a data system through a control unit of the device (100).

13. A device as claimed in any one of claims 1 to 12, wherein the device (100) is configured to take a plurality of samples so that, out of each sample taken by the sampling head (110), a partial sample, only, is collected to the sample collector (200), and the remaining sample is adapted to drop back to said at least partly enclosed space, and wherein the sampling head (110) is additionally adapted to take each sample from a different point in said at least partly enclosed space.

14. A method for taking samples with a sampling device (100) from granular material in an at least partly enclosed space, the method comprising:
inserting a sampling head (110) of the sampling device (100) at least partly into the material so that a bore part (112) of the sampling head rotates, while being placed, for at least a partial rotation in order to collect material in the sampling head, wherein at least part of the material flows to the sampling head through an open tip section of the sampling head and out of the sampling head along the bore part through at least one second open section of the sampling head as the bore part is rotating in a filling direction in the material;
transferring the sampling head (110) out of the material;
**characterized in that** the method further comprises
rotating the bore part (112) for at least a partial rotation so that at least a part of the material in the bore part flows out of the bore part;
collecting a first partial sample from the material flowing out of the bore part into a sample section (212) of a sample collector (200) in the sampling device (100), adapted to receive granular material corresponding to the volume of the first partial sample;
increasing the volume of the sample section (212), after the collection of the first partial sample, by an amount corresponding to the volume of a second partial sample of a second sample to enable the sample section (212) to fit both the first and second partial samples.

15. A method as claimed in claim 14, wherein the method additionally comprises:
boring one or more second samples;
collecting a partial sample out of each bored sample into the sample section; and
increasing the volume of the sample section after collecting each partial sample until a predetermined number of partial samples has been collected.

## Patentansprüche

1. Probenahmevorrichtung (100) zum Probenehmen von granularem Material in einem mindestens teilweise umschlossenen Raum, wobei die Vorrichtung (100) Folgendes umfasst:
einen Probenahmekopf (110), der einen Bohrteil (112) umfasst,
ein Mittel (122) zum linearen Bewegen des Probenahmekopfes (110) in das Material und aus dem Material,
ein Mittel (124) zum Herstellen einer Drehbewegung für das Bohrteil (112) durch Drehen des Bohrteils, und
wobei der Probenahmekopf (110) angepasst ist, mit dem Spitzenabschnitt des Probenahmekopfes zuerst in das Material platziert zu werden, wenn der Bohrteil (112) in das Material bohrt, und wobei der Probenahmekopf (110) an mindestens einem zweiten Punkt wie der Spitzenabschnitt offen ist, derart, dass das Materialgranulat, das mit dem Bohrteil (112) in mechanischem Kontakte ist, ersetzt werden kann, wenn das Bohrteil (112) in das Material bohrt,
**dadurch gekennzeichnet, dass** der Bohrteil (112) zusätzlich angepasst ist, sich zu drehen, während der Probenahmekopf (110) vom Material abgesetzt ist, um den Probenahmekopf (110) zu entleeren und eine Teilprobe in einem Probensammler (200) der Probenahmevorrichtung (100) von dem aus dem Probenahmekopf (110) entfernten Material zu sammeln, wobei der Probensammler (200) angepasst ist, mit dem Probenahmekopf (110), der die Proben bohrt, zusammenzuwirken,
und dadurch, dass der Probensammler (200) einen Tank (210), der angepasst und dimensioniert ist, um eine Vielzahl von Teilproben der vom Probenahmekopf (110) gebohrten Proben zu speichern, und ein Einstellelement (214, 216), das angepasst ist, das Volumen des Probenbereichs (212) des Tanks (210) einzustellen, umfasst, wobei der Probenbereich (212) angepasst ist, die Teilproben zu sammeln, derart, dass im Probenbereich (212) im Wesentlichen nur Platz für die Menge einer ersten Teilprobe einer ersten Probe ist, wobei das Einstellelement (214, 216) zusätzlich angepasst ist, das Volumen des Probenbereichs (212) nach Sammeln der ersten Teilprobe um eine Menge, die einem Volumen einer zweiten Teilprobe einer zweiten Probe entspricht, zu erhöhen, derart, dass sowohl die erste als auch die zweite Teilprobe in den Probenbereich passen.

2. Probenahmevorrichtung (100) nach Anspruch 1, wobei der Bohrteil (112) angepasst ist, in eine Füllrichtung (10A) zu drehen, wenn der Bohrteil (112) in das Material bohrt, und in eine Entleerungsrichtung (10B), die der Füllrichtung entgegengesetzt ist, um den Probenahmekopf (110) zu entleeren, wenn der Probenahmekopf (110) vom Material abgesetzt ist.

3. Vorrichtung nach Anspruch 1 oder 2, wobei der Bohrteil einen Stummelbohrer umfasst.

4. Vorrichtung nach einem der Ansprüche 1 bis 3, wobei der Bohrteil den Probenahmekopf bildet.

5. Vorrichtung nach einem der Ansprüche 1 bis 4, wobei das Gewinde des Bohrteils eine Form aufweist, die Material im Bohrteil hält.

6. Probenahmevorrichtung (100) nach einem der Ansprüche 1 bis 5, wobei das Einstellelement (214, 216) einen Kolben (214) umfasst, der angepasst und dimensioniert ist, um mit der Kolbenstange (216) zusammenzuwirken, derart, dass die Position des Kolbens (214) im Tank (210) geändert werden kann, wobei der Kolben (214) eine derartige Außendimension aufweist, dass er zusammen mit der Innenwand des Tanks (210) den Probenbereich (212) des Tanks bildet, und wobei der Kolben (214) angepasst ist, als der Boden des Probenbereichs zu fungieren.

7. Probenahmevorrichtung (100) nach Anspruch 6, wobei der Probenbereich (212) angepasst ist, derart entleert zu werden, dass der Kolben (214) mindestens teilweise auf das Niveau des Fülllochs des Tanks (210) gedrückt wird.

8. Probenahmevorrichtung (100) nach Anspruch 6 oder 7, wobei die Fläche des Kolbens (214), der angepasst ist, als der Boden des Probenbereich (212) zu fungieren, mit einem staubbeständigen Material behandelt ist.

9. Vorrichtung nach einem der Ansprüche 1 bis 8, wobei der Probenahmekopf zusätzlich ein äußeres Rohr umfasst, das den Bohrteil umgibt, wobei das äußere Rohr einen offenen Spitzenteil aufweist und mindestens eine Klinge umfasst, und wobei das äußere Rohr zusätzlich mindestens eine Öffnung umfasst, durch die das Material angepasst ist, aus dem Probenahmekopf zu fließen, wenn sich mindestens der Bohrteil in die Füllrichtung dreht, wobei die Vorrichtung zusätzlich einen Koppler umfasst, der an das äußere Rohr wirkgekoppelt ist, wobei, wenn sich der Koppler in einer ersten Position befindet, das äußere Rohr sich nicht dreht, und wobei, wenn sich der Koppler in einer zweiten Position befindet, das äußere Rohr sich mit dem Bohrteil dreht.

10. Vorrichtung nach Anspruch 9, wobei der Koppler ein Reibkoppler ist, der angepasst und dimensioniert ist, um sich in einer zweiten Position zu befinden, wenn der Materialwiderstand, der vom Material hergestellt und vom Probenahmekopf angetroffen wird, mindestens so groß ist wie ein vorbestimmter Wert, wobei der Reibkoppler in die zweite Position schaltet, wenn die Feder, die an den Reibkoppler gekoppelt ist, einer Kraft unterliegt, die mindestens die Größe des vorbestimmten Wertes aufweist.

11. Vorrichtung nach einem der Ansprüche 1 bis 10, die zusätzlich ein Sensormodul umfasst, das angepasst ist, die Feuchtigkeit des Materials im Probensammler (200) zu messen.

12. Vorrichtung nach Anspruch 11, wobei das Sensormodul angepasst ist, Echtzeitfeuchtigkeitsmessdaten über eine Steuereinheit der Vorrichtung (100) zu einem Datensystem zu übertragen.

13. Vorrichtung nach einem der Ansprüche 1 bis 12, wobei die Vorrichtung (100) dazu ausgelegt ist, eine Vielzahl von Proben zu nehmen, derart, dass von jeder vom Probenahmekopf (110) genommenen Probe nur eine Teilprobe im Probensammler (200) gesammelt wird, und die verbleibende Probe angepasst ist, in den mindestens teilweise umschlossenen Raum zurückzufallen, und wobei der Probenahmekopf (110) zusätzlich angepasst ist, jede Probe von einem anderen Punkt in dem mindestens teilweise umschlossenen Raum zu nehmen.

14. Verfahren zum Nehmen von Proben aus granularem Material mit einer Probenahmevorrichtung (100) in einem mindestens teilweise umschlossenen Raum, wobei das Verfahren Folgendes umfasst:
Einführen eines Probenahmekopfes (110) der Probenahmevorrichtung (100) mindestens teilweise in das Material, derart, dass ein Bohrteil (112) des Probenahmekopfes sich mindestens um eine Teildrehung dreht, während er platziert wird, um Material im Probenahmekopf zu sammeln, wobei mindestens ein Teil des Materials durch einen offenen Spitzenbereich des Probenahmekopfes zum Probenahmekopf fließt und entlang des Bohrteils durch mindestens einen zweiten offenen Bereich des Probenahmekopfes aus dem Probenahmekopf fließt, wenn sich der Bohrteil in eine Füllrichtung in das Material dreht;
Transferieren des Probenahmekopfes (110) aus dem Material;
**dadurch gekennzeichnet, dass** das Verfahren ferner Folgendes umfasst
Drehen des Bohrteils (112) um mindestens eine Teildrehung, derart, dass mindestens ein Teil des Materials im Bohrteil aus dem Bohrteil fließt;
Sammeln einer ersten Teilprobe des Materials, das aus dem Bohrteil in einen Probenbereich (212) eines Probensammlers (200) in der Probenahmevorrichtung (100) fließt, der angepasst ist, granulares Material, das dem Volumen der ersten Teilprobe entspricht, aufzunehmen;
Erhöhen des Volumens des Probenbereichs (212) nach Sammeln der ersten Teilprobe um eine Menge, die dem Volumen einer zweiten Teilprobe einer zweiten Probe entspricht, um es zu ermöglichen, dass sowohl die erste als auch die zweite Teilprobe in den Probenbereich (212) passen.

15. Verfahren nach Anspruch 14, wobei das Verfahren zusätzlich Folgendes umfasst:
Bohren von einer oder mehreren zweiten Proben;
Sammeln einer Teilprobe von jeder gebohrten Probe im Probenbereich; und
Erhöhen des Volumens des Probenbereiches nach Sammeln jeder Teilprobe, bis eine vorbestimmte Anzahl von Teilproben gesammelt wurde.

## Revendications

1. Dispositif d'échantillonnage (100) pour échantillonner un matériau granulaire dans un espace au moins partiellement clos, le dispositif (100) comprenant :
une tête d'échantillonnage (110), qui comprend une partie d'alésage (112),
des moyens (122) pour déplacer linéairement la tête d'échantillonnage (110) dans le matériau et hors du matériau,
des moyens (124) pour produire un mouvement de rotation pour la partie d'alésage (112) en faisant tourner la partie d'alésage, et
dans lequel la tête d'échantillonnage (110) est adaptée pour être placée dans le matériau avec la portion de pointe de la tête d'échantillonnage en premier tandis que la partie d'alésage (112) perce le matériau, et dans lequel la tête d'échantillonnage (110) est ouverte, comme la portion de pointe, sur au moins un second point de sorte que les granulés de matériau en contact mécanique avec la partie d'alésage (112) puissent être remplacés tandis que la partie d'alésage (112) perce le matériau,
**caractérisé en ce que** la partie d'alésage (112) est en outre adaptée pour tourner tandis que la tête d'échantillonnage (110) est hors du matériau pour vider la tête d'échantillonnage (110) et pour collecter un échantillon partiel vers un collecteur d'échantillon (200) du dispositif d'échantillonnage (100) à partir du matériau retiré de la tête d'échantillonnage (110), le collecteur d'échantillon (200) étant adapté pour coopérer avec la tête d'échantillonnage (110) forant les échantillons,
et **en ce que** le collecteur d'échantillon (200) comprend un réservoir (210) adapté et dimensionné pour stocker une pluralité d'échantillons partiels à partir des échantillons forés par la tête d'échantillonnage (110), et un élément de réglage (214, 216), qui est adapté pour régler le volume d'une section d'échantillon (212) du réservoir (210), la section d'échantillon (212) étant adaptée pour collecter les échantillons partiels, de sorte qu'il y ait une chambre dans la section d'échantillon (212) sensiblement uniquement pour la quantité d'un premier échantillon partiel d'un premier échantillon, l'élément de réglage (214, 216) étant en outre adapté pour augmenter le volume de la section d'échantillon (212), après la collecte du premier échantillon partiel, d'une quantité correspondant à un volume d'un second échantillon partiel d'un second échantillon de sorte que les premier et second échantillons partiels s'ajustent tous deux dans la section d'échantillon.

2. Dispositif d'échantillonnage (100) selon la revendication 1, dans lequel la partie d'alésage (112) est adaptée pour tourner dans une direction de remplissage (10A) tandis que la partie d'alésage (112) perce le matériau, et dans une direction de vidange (10B), opposée à la direction de remplissage, pour vider la tête d'échantillonnage (110) lorsque la tête d'échantillonnage (110) est hors du matériau.

3. Dispositif selon la revendication 1 ou 2, dans lequel la partie d'alésage comprend un alésage d'embout.

4. Dispositif selon l'une quelconque des revendications 1 à 3, dans lequel la partie d'alésage forme la tête d'échantillonnage.

5. Dispositif selon l'une quelconque des revendications 1 à 4, dans lequel le filetage de la partie d'alésage a une forme qui retient un matériau dans la partie d'alésage.

6. Dispositif d'échantillonnage (100) selon l'une quelconque des revendications 1 à 5, dans lequel l'élément de réglage (214, 216) comprend un piston (214), qui est adapté et dimensionné pour coopérer avec la tige de piston (216) de sorte que la position du piston (214) à l'intérieur du réservoir (210) puisse être modifiée, dans lequel le piston (214) a une dimension extérieure telle qu'il forme, conjointement avec la paroi intérieure du réservoir (210), la section d'échantillon (212) du réservoir, et dans lequel le piston (214) est adapté pour agir comme fond de la section d'échantillon.

7. Dispositif d'échantillonnage (100) selon la revendication 6, dans lequel la section d'échantillon (212) est adaptée pour être vidée de sorte que le piston (214) soit au moins partiellement poussé au niveau du trou de remplissage du réservoir (210).

8. Dispositif d'échantillonnage (100) selon la revendication 6 ou 7, dans lequel la surface du piston (214), adaptée pour agir comme fond de la section d'échantillon (212), est traitée avec un matériau résistant à la poussière.

9. Dispositif selon l'une quelconque des revendications 1 à 8, dans lequel la tête d'échantillonnage comprend en outre un tube extérieur entourant la partie d'alésage, ledit tube extérieur ayant une partie de pointe ouverte et comprenant au moins une lame, et dans lequel le tube extérieur comprend en outre au moins une ouverture à travers laquelle le matériau est adapté pour s'écouler hors de la tête d'échantillonnage lorsqu'au moins la partie d'alésage tourne vers la direction de remplissage, dans lequel le dispositif comprend en outre un coupleur couplé de manière opérationnelle au tube extérieur, dans lequel lorsque le coupleur est dans une première position, le tube extérieur ne tourne pas, et dans lequel lorsque le coupleur est dans une seconde position, le tube extérieur tourne avec la partie d'alésage.

10. Dispositif selon la revendication 9, dans lequel le coupleur est un coupleur à friction adapté et dimensionné pour être dans une seconde position lorsque la résistance du matériau produite par le matériau et rencontrée par la tête d'échantillonnage est au moins aussi élevée qu'une valeur prédéterminée, dans lequel le coupleur à friction passe à la seconde position lorsque le ressort qui est couplé au coupleur à friction est soumis à une force au moins de l'ordre de ladite valeur prédéterminée.

11. Dispositif selon l'une quelconque des revendications 1 à 10, qui comprend en outre un module de capteur adapté pour mesurer l'humidité du matériau dans le collecteur d'échantillon (200).

12. Dispositif selon la revendication 11, dans lequel le module de capteur est adapté pour transmettre des données de mesure d'humidité en temps réel à un système de données à travers une unité de commande du dispositif (100).

13. Dispositif selon l'une quelconque des revendications 1 à 12, dans lequel le dispositif (100) est configuré pour prélever une pluralité d'échantillons de sorte que, à partir de chaque échantillon prélevé par la tête d'échantillonnage (110), un échantillon partiel, uniquement, soit collecté vers le collecteur d'échantillon (200), et que l'échantillon restant soit adapté pour revenir dans ledit espace au moins partiellement clos, et dans lequel la tête d'échantillonnage (110) est adaptée en outre pour prélever chaque échantillon à partir d'un point différent dans ledit espace au moins partiellement clos.

14. Procédé de prélèvement d'échantillons à l'aide d'un dispositif d'échantillonnage (100) à partir d'un matériau granulaire dans un espace au moins partiellement clos, le procédé comprenant les étapes consistant à :
insérer une tête d'échantillonnage (110) du dispositif d'échantillonnage (100) au moins partiellement dans le matériau de sorte qu'une partie d'alésage (112) de la tête d'échantillonnage tourne, tout en étant placée, pour au moins une rotation partielle afin de collecter le matériau dans la tête d'échantillonnage, dans lequel au moins une partie du matériau s'écoule vers la tête d'échantillonnage à travers une section de pointe ouverte de la tête d'échantillonnage et hors de la tête d'échantillonnage le long de la partie d'alésage à travers au moins une seconde section ouverte de la tête d'échantillonnage tandis que la partie d'alésage tourne dans une direction de remplissage dans le matériau ;
transférer la tête d'échantillonnage (110) hors du matériau :
**caractérisé en ce que** le procédé comprend en outre les étapes consistant à
faire tourner la partie d'alésage (112) pour au moins une rotation partielle de sorte qu'au moins une partie du matériau dans la partie d'alésage s'écoule hors de la partie d'alésage ;
collecter un premier échantillon partiel à partir du matériau s'écoulant hors de la partie d'alésage dans une section d'échantillon (212) d'un collecteur d'échantillon (200) dans le dispositif d'échantillonnage (100), adapté pour recevoir un matériau granulaire correspondant au volume du premier échantillon partiel ;
augmenter le volume de la section d'échantillon (212), après la collecte du premier échantillon partiel, d'une quantité correspondant au volume d'un second échantillon partiel d'un second échantillon pour permettre à la section d'échantillon (212) de s'ajuster à la fois aux premier et second échantillons partiels.

15. Procédé selon la revendication 14, dans lequel le procédé comprend en outre les étapes consistant à :
forer un ou plusieurs seconds échantillons ;
collecter un échantillon partiel à partir de chaque échantillon foré dans la section d'échantillon ; et
augmenter le volume de la section d'échantillon après la collecte de chaque échantillon partiel jusqu'à ce qu'un nombre prédéterminé d'échantillons partiels ait été collecté.
